(19) Europäisches Patentamt

European Patent Office

Office européen des brevets

(11) **EP 1 074 591 A2**

(12) **EUROPÄISCHE PATENTANMELDUNG**

(43) Veröffentlichungstag:
07.02.2001 Patentblatt 2001/06

(51) Int. Cl.$^7$: **C09D 175/06**, C08G 18/42

(21) Anmeldenummer: 00115027.5

(22) Anmeldetag: 25.07.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **04.08.1999 DE 19936635**

(71) Anmelder: **Wolff Walsrode AG**
**29655 Walsrode (DE)**

(72) Erfinder:
• **Hoppe, Lutz, Dr.**
**29664 Walsrode (DE)**
• **Poersch-Panke, Hans-Günter, Dr.**
**29699 Bomlitz (DE)**

(74) Vertreter:
**Feldhues, Michael L.F., Dr. et al**
**Bayer Aktiengesellschaft,**
**Konzernbereich RP,**
**Patente und Lizenzen**
**51368 Leverkusen (DE)**

(54) **Wässrige Überzugsmittel und dessen Verwendung in Lacken**

(57) Beschrieben wird eine Cellulosesubstanz-enthaltende Lack-Emulsion, aufgebaut aus

a) 5 - 50 Gew.-% Cellulosesubstanz
b) 5 - 50 Gew.-% eines oder mehrerer Hydroxylgruppen-enthaltende Lackharze
c) 0,1 - 10 Gew.-% Polyisocyanate mit mehr als einer freien Isocyanatgruppe
d) 0,5 - 30 Gew.-% Weichmacher
e) 0,0 - 20 Gew.-% Emulgatoren
f) 0,0 - 45 Gew.-% wenigstens eines organischen Lösemittels
g) 10 - 65 Gew.-% Wasser,

wobei die Summe a) - g) immer 100 Gew.-% ist, dadurch gekennzeichnet, daß das Gewichtsverhältnis der OH-Gruppen (aus dem Lackharz) zu den NCO-Gruppen 1 : 0,01 - 1,0 beträgt.
Ebenfalls beschrieben wird die Verwendung dieser Emulsionen in Lacken.

**EP 1 074 591 A2**

Printed by Xerox (UK) Business Services
2.16.7 (HRS)/3.6

**Beschreibung**

Nitrocellulose-Kombi-Lacke, hergestellt durch Lösen von Nitrocellulose (NC), Alkydharz, Weichmacher und eventuell üblichen Lackadditiven in organischen Lösemitteln sind bekannt. Diese Lacke können zur Lackierung von Oberflächen wie z.B. Holz, Metall, Papier, Leder, Kunststoff etc., verwendet werden. Nachteilig ist der hohe Lösemittelgehalt von 60 bis 80 %.

In der EP 0 076 443 wird die Herstellung u.a. von wäßrigen NC-Alkydharz-Emulsionen beschrieben, in welchen das Lösemittel ganz oder teilweise durch Wasser ersetzt wird. Werden Oberflächen, z.B. aus Holz, mit diesen wäßrigen Emulsionen lackiert und die chemischen Beständigkeiten gemäß DIN 68 861, Teil 1, 1 B, ermittelt, dann sind die Beständigkeiten gegenüber Wasser, Ethanol und Aceton nicht ausreichend.

Chemisch vernetzende wäßrige Zwei-Komponenten-Polyurethan-Beschichtungsmittel mit freien Polyisocyanaten als Härter für das Bindemittel wurden in EP 0 358 979 beschrieben. Danach vermögen Polyhydroxyacrylate als Bindemittelkomponente bestimmte Polyisocyanate mit freien Isocyanatgruppen, die auch als Lackpolyisocyanate bezeichnet werden, zu emulgieren. Das so entstehende wäßrige Zwei-Komponenten-System härtet zu vernetzten Filmen aus. Die Lackpolyisocyanate sind Biuret-, Urethan-, Uretdion- und/oder Isocyanatgruppen enthaltende oligomere Derivate von gut verfügbaren monomeren oder einfachen Diisocyanaten, insbesondere von Hexamethylendiisocyanat (HDI), Isophorondiisocyanat (IPDI) und/oder Bis(isocyanatocyclohexyl)methan (HMDI). Die nach EP 0 358 979 verwendeten Lackpolyisocyanate haben eine Viskosität bei 23°C von bis zu 1 000 mPa • s und weisen eine mittlere NCO-Funktionalität von 2,2 bis 5 auf.

In der Offenlegungsschrift DE-A 4226 243 wird ein wäßriges Zwei-Komponenten-Überzugsmittel auf Basis von Polyisocyanaten und selbstemulgierenden fettsäuremodifizierten Polyestern und Polyurethanen beschrieben. Auch die eüropäische Patentanmeldung EP-A 0 496 205 beschreibt wäßrige Bindemittelkombinationen auf Basis von Polyisocyanaten und selbstemulgierenden Urethan-, Carboxyl- und Hydroxyl-Gruppen aufweisenden Polyesterharzen. In der deutschen Patentschrift DE 3 122 030 werden Überzugszusammensetzungen aus Polyisocyanat, wasserverdünnbaren Alkyd-, Melamin- und Acrylharzen beschrieben, die noch wassermischbare Lösemittel enthalten.

Nachteile dieser oben beschriebenen wasserverdünnbaren Zwei-Komponenten-Bindemittel ist der niedrige erreichbare Festkörpergehalt, die kurze Topfzeit und die langen Trocken-/Aushärtezeiten. Ferner sind die "Anfeuerung auf Holz", die Anfangshärte und Schleifbarkeit unbefriedigend.

Die Aufgabe der Erfindung bestand nun darin, die Beständigkeit der wäßrigen NC-Lackharz-Emulsionen so zu verbessern, daß mit diesen wäßrigen Ein-Komponenten-Systemen gute Beständigkeiten gemäß der DIN 68 861, Teil 1, 1 B, erreicht werden.

Gegenstand der Erfindung sind wäßrige Emulsionen, erhältlich durch teilweise oder vollständige Reaktion der Polyisocyanate mit OH-Gruppen-haltigen Lackharzen, welchen die Cellulosesubstanz vor, während oder nach der NCO-OH-Reaktion zugesetzt wurde, um unter Zusatz von Weichmachern, Emulgatoren, Lösemitteln und Wasser wäßrige "Ein-Komponenten"-Lackemulsionen zu erhalten.

Die Lack-Emulsionen enthalten Umsetzungsprodukte folgender Ausgangsstoffe:

a) 5 - 50      Gew.-% Cellulosesubstanz
b) 5 - 50      Gew.-% eines oder mehrerer Hydroxylgruppen-enthaltende Lackharze
c) 0,1 - 10      Gew.-% Polyisocyanate mit mehr als einer freien Isocyanatgruppe
d) 0,5 - 30      Gew.-% Weichmacher
e) 0,0 -20      Gew.-% Emulgatoren
f) 0,0 - 45      Gew.-% wenigstens eines organischen Lösemittels
g) 10 - 65      Gew.-% Wasser,

wobei die Summe a) - g) immer 100 Gew.-% ist, dadurch gekennzeichnet, daß das Gewichtsverhältnis Cellulosesubstanz : OH-Gruppen-haltiges Lackharz 1 : 5 bis 5 : 1 und das Äquivalentverhältnis der OH-Gruppen (aus dem Lackharz) zu den NCO-Gruppen 1: 0,01 - 1,0 beträgt.

Als Cellulosesubstanz eignen sich vorzugsweise Celluloseester, insbesondere Nitrocellulose aller Viskositätsstufen oder plastifizierte Nitrocellulose oder deren Mischungen. Ganz besonders geeignet ist Nitrocellulose, beispielsweise die üblichen Collodiumwollequalitäten, d.h. Cellulosesalpetersäureester mit einem Stickstoffgehalt von 10,7 bis 12,6 Gew.-%.

Weitere einsetzbare Cellulosesubstanzen sind Celluloseacetobutyrat und Celluloseacetopropionat verschiedener Viskositäts- und Substitutionsstufen.

Als Lackharze können die üblichen Lackharze verwendet werden, wenn diese mit Isocyanat reaktive Gruppen, wie z.B. -OH, -COOH, -NH$_2$, -CONH$_2$ enthalten. Übliche Lackharze sind z.B. Alkyd-, Maleinsäure-, Phenol, Formaldehyd-, Xylol-Formaldehyd-, Keton-, Sulfonamid-, Aldehyd-, Amin-, Epoxy-, Carbamidsäureester-, Kumaron-Inden-Harze, Ester der Saccharose, Vinyl-, Acrylat- und deren Copolymerisationsharze.

Es ist vorteilhaft, wenn die Hydroxylgruppen-haltigen Lackharze eine OH-Zahl zwischen 20 und 200 mg KOH/g aufweisen.

Als Weichmacher können die üblichen Weichmacher wie z.B. die Ester von aliphatischen Monocarbonsäure, vorzugsweise mit $C_2$-$C_{18}$ wie Cetylacetat, Glykoldiacetat, Stearate, Ricinolacetate, Dicarbonsäuren, wie z.B. der Dioctyladipat, Dimethylcyclohexylmethyladipat, Dibutylsebacat; aromatischen Dicarbonsäuren, wie z.B. der Dibutylphthalat, Dioctylphthalat, Dicyclohexylphthalat, aliphatischen Tricarbonsäure, vorzugsweise mit $C_8$, von aromatischen Dicarbonsäuren und von einwertigen Alkoholen mit $C_2$-$C_{10}$, von zweiwertigen Alkoholen mit $C_2$-$C_6$ und dreiwertigen Alkoholen mit $C_3$ oder die Ester von anorganischen Säuren, wie z.B. Tributylphosphat, Triphenylphosphat; Estern der Zitronensäure mit Alkoholen mit 1 bis 5 C-Atomen, welche zusätzlich mit Monocarbonsäuren mit 1 bis 4 C-Atomen umgesetzt sein können; sowie Sulfonamide, Öle wie Rizinusöl und Leinöl und die Alkoxylierungsprodukte der genannten Verbindungen, wie z.B. ethoxylierte Rizinusöle und Sojaöle, Stearate und Phosphorsäureester eingesetzt werden.

Als Emulgatoren können gegebenenfalls anionische Emulgatoren, beispielsweise langkettige Alkylarylsulfonate, wie Dodecylbenzol- oder Butylnaphthalinsulfonat, Alkylsulfate, wie Lauryl- oder Stearylalkoholsulfate, Sulfobernsteinsäureester, wie Dioctyldinatriumsuccinat, oder nichtionogene Emulgatoren, wie Octyl- oder Nonylphenoloxethylate verwendet werden.

Als anionische Emulgatoren sind ferner die Dinatriumsalze der Sulfobernsteinsäurederivate von ethopxylierten Nonylphenolen zu nennen.

Als Lösemittel sind die üblichen organischen Lösemittel einsetzbar, sofern die Cellulosesubstanz und das Lackharz darin löslich sind.

Bei den Polyisocyanaten handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Besonders bevorzugt handelt es sich bei den Polyisocyanaten um Polyisocyanate oder Polyisocyanatgemische mit ausschließlich aliphatisch und/oder cycloaliphatisch gebundenen Isocyanatgruppen einer zwischen 1,8 und 5,0 liegenden (mittleren) NCO-Funktionalität.

Falls erforderlich, können die Polyisocyanate in Abmischung mit geringen Mengen an inerten Lösungsmitteln zum Einsatz gelangen, um die Viskosität auf einen Wert innerhalb der genannten Bereicht abzusenken.

Geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis-(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanatgruppen aufweisenden Derivate dieser Diisocyanate zu verstehen.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan erhalten werden. Weitere aromatische Lackpolyisocyanate sind beispielsweise die Trimerisate der beispielhaft genannten monomeren Diisocyanate, d.h. die entsprechenden Isocyanato-isocyanurate.

Grundsätzlich möglich ist selbstverständlich auch die Verwendung von unmodifizierten Polyisocyanaten der beispielhaft genannten Art.

Die Polyisocyanatkomponente kann im übrigen aus beliebigen Gemischen der beispielhaft genannten Polyisocyanate bestehen.

Geeignet sind auch hydrophilierte Polyisocyanate der o.g. Basisprodukte, die sich leicht in Wasser emulgieren lassen.

Die Herstellung der Cellulosesubstanz-Lackharz-Emulsion erfolgt gemäß EP 0 076 443.

Die Herstellung der Cellulosesubstanz-Lackharz-Emulsion erfolgt gemäß EP 0 076 443.

Die Umsetzung z.B. des OH-Gruppen-haltigen Alkydharzes, gelöst z.B. in Butylacetat, mit einem Polyisocyanat erfolgt bei Temperaturen bis max. 80°C, bevorzugt bis 60°C, wobei das OH NCO-Verhältnis so eingestellt werden muß, daß das Harz nicht vergelt und noch gut filmbildend ist. Die NCO-Gruppen müssen nicht vollständig mit den OH-Gruppen des Lackharzes reagiert haben.

Zum so modifizierten Alkydharz werden die Cellulosesubstanz, Weichmacher gegebenenfalls Emulgatoren, gegebenenfalls organische Lösemittel gegeben und so lange gerührt, bis keine Fasern der Cellulosesubstanz mehr sichtbar sind. Dabei durchläuft die Masse einen hochviskosen Zustand. Durch Zusatz von Wasser entsteht eine Öl-in-Wasser-Emulsion (Ein-Komponenten-System). Es ist auch möglich, zu dieser Emulsion weitere hydrophile Polyisocyanate zuzusetzen, um dann ein "Zwei-Komponenten-System" zu erhalten.

Ein weiterer Gegenstand der Erfindung ist die Verwendung der erfindungsgemäßen Überzugsmittel in Lakken für die Oberflächenbehandlung von Holz, Metall, Kunststoff, Papier, Leder oder Glas.

Je nach Anwendungsgebiet (z.B. Holz-, Metall-, Kunststoff-, Papier-, Leder-, Glas- und Folienlackierungen) können noch weitere bekannte organische Lösungsmittel der Emulsion zugesetzt werden, wobei eine Lösungsmittelkonzentration von 30 %, bezogen auf die Endlackformulierung, nicht überschritten werden sollte.

Die Viskosität kann entweder mit Wasser oder durch Zusatz wasserlöslicher Verdicker auf Basis z.B. von Polyurethanen, Cellulose, Guar, Stärke u.ä. für die gewünschte Applikation eingestellt werden.

Schleifbarkeits-Verbesserungsmittel, Verlaufsmittel, Stabilisatoren, Lichtschutzmittel und Farbstoffe, Pigmente und lackübliche Additive.

Die gemäß der Erfindung hergestellten wäßrigen Überzugsmittelemulsionen weisen einen sehr guten Verlauf, hohen Glanz, gute Wasser-, Ethanol- und Acetonbeständigkeiten gemäß DIN 68 861 Teil 1, 1 B, auf.

## Beispiele

In einem 2-L-Rührgefäß wird zum hydroxylgruppenhaltigen Alkydharz unter Rühren (100 UpM) bei 20°C das Polyisocyanat gegeben. Nach der Zugabe von Dibutylzinndilaurat wird auf 60°C aufgeheizt und 2 h weitergerührt. Nach Zugabe der Emulgatoren. Dibutylphthalat und Methoxypropylacetat wird Nitrocellulose vom Normtyp E 24 ($N_2$-Gehalt = 12,1 Gew.-%) angefeuchtet, mit 35 Gew.-% Wasser zugesetzt und 1 h bei 60°C und 50 UpM homogenisiert. Danach wird Wasser zugesetzt und dabei die Rührgeschwindigkeit auf 900 UpM gesteigert und gleichzeitig auf Zimmertemperatur abgekühlt.

| | Beispiel 1 | Beispiel 2 | Beispiel 3 |
|---|---|---|---|
| OH-haltiges Alkydharz | 326,9 g v.[1] | 286,9 g v. [2] | 326,9 g v. [1] |
| Isophorondiisocyanat | 10,4 g | 15,9 g | - |
| Bis(isocyanatocyclohexyl)methan | - | - | 12,3 g |
| Dibutylzinndilaurat | 0,2 g | 0,2 g | 0,2 g |
| Emulgator 1 [3] | 21,3 g | 21,3 g | 32,0 g |
| Emulgator 2 [4] | 6,7 g | 6,7 g | 10,0 g |
| DBP | 18,7 g | 18,7 g | 28,0 g |
| Methyoxypropylacetat | 25,3 g | 25,3 g | 38,0 g |
| Nitrocellulose Normtyp E 24 | 120,6 g | 120,6 g | 180,9 g |
| Wasser | 342,7 g | 391,6 g | 423,4 g |
| | | | |
| Festkörpergehalt | 38,7 Gew.-% | 39,9 Gew.-% | 38,0 Gew.-% |
| DIN-4-Viskosität bei 20°C | 21 s | 13 s | 18 s |
| pH | 5,2 | 6,2 | 5,4 |
| NC : Alkyl | 1:2,6 | 1:2,6 | 1:1,73 |
| OH : NCO | 1 : 0,3 | 1 : 0,21 | 1 : 0,3 |

1) Eingesetzt wurde das hydroxylgruppenhaltige Alkydharz "Halweftal B 32" der Fa. Hüttenes-Alberts Lackrohstoff GmbH als 62,4 gew.-%iges Alkydharz, gelöst in Butylacetat (OH-Zahl = 152 mg KOH/g Probe)

2) Eingesetzt wurde das hydroxylgruppenhaltige Alkydharz, hergestellt gemäß Beispiel 1 der NL-Anmeldung 1 008 777 als 71,1 gew.-%iges Alkydharz in Butylacetat (OH-Zahl = 145 mg KOH/g Probe)

3) Emulgator 1: Gemisch aus Polyethoxytridecyletherphosphat und Tridecylpoly(ethoxy)ethanol (Handelsprodukt "Rhodafac RS 710" der Rhone Poulenc Chemie)

4) Emulgator 2: Triglyzeridethoxylat (Handelsprodukt "Produkt GN 8403/50" der Fa. Zschimmer & Schwarz).

Zur Ermittlung der Chemikalienbeständigkeit gemäß DIN 68 861, Teil 1, 1 B, wurden zu 100 g Emulsion aus Beispiel 1 → 8 g, zu Emulsion aus Beispiel 2 → 6 g und zu Emulsion aus Beispiel 3 → 8 g Butylglykolacetat gegeben.

Die Emulsionen wurden mit einem 120-μm-Rakel als Grund- und Decklack auf Holz aufgetragen. Die Grundierung wurde bei 50°C getrocknet, geschliffen und decklackiert. Gemäß DIN 68 861, Teil 1, 1 B, wurde 7 Tage bei 50°C getrocknet, anschließend 24 h bei Raumtemperatur gelagert und dann die Wasser-, Ethanol- und Acetonbeständigkeiten ermittelt.

Zum Vergleich wurden gemäß EP-PS 0 076 443 aus den Ausgangsstoffen des Beispiels 1 die NC-Alkydharz-Emulsion 4 und aus Beispiel 2 die Emulsion 5, jedoch ohne Polyisocyanat und ohne Dibutylzinndilaurat, hergestellt. Den Emulsionen 4 und 5 wurden auf 100 g Emulsion vor der Applikation auf Holz jeweils 6 g Butylglykolacetat zugesetzt. Die Chemikalienbeständigkeit nach DIN 68 861, Teil 1, 1 B, sind in folgender Tabelle zusammengestellt:

|  | Wasser | Ethanol | Aceton |
|---|---|---|---|
| Beispiel 1 | 0 | 0 | 0 |
| Beispiel 2 | 0 | 0 | 0 |
| Beispiel 3 | 0 | 0 | 0 |
| Emulsion 4 | 4 | 4 | 5 |
| Emulsion 5 | 4 | 4 | 5 |

**Patentansprüche**

1. Cellulosesubstanz-enthaltende Lack-Emulsion, aufgebaut aus

   a) 5 - 50        Gew.-% Cellulosesubstanz
   b) 5 - 50        Gew.-% eines oder mehrerer Hydroxylgruppen-enthaltende Lackharze
   c) 0,1 - 10      Gew.-% Polyisocyanate mit mehr als einer freien Isocyanatgruppe
   d) 0,5 - 30      Gew.-% Weichmacher
   e) 0,0 -20       Gew.-% Emulgatoren
   f) 0,0 - 45      Gew.-% wenigstens eines organischen Lösemittels
   g) 10 - 65       Gew.-% Wasser,

   wobei die Summe a) - g) immer 100 Gew.-% ist, dadurch gekennzeichnet, daß das Gewichtsverhältnis der OH-Gruppen (aus dem Lackharz) zu den NCO-Gruppen 1: 0,01 - 1,0 beträgt.

2. Cellulosesubstanz gemäß Anspruch 1, dadurch gekennzeichnet, daß es sich um Celluloseester handelt.

3. Lackharze gemäß Anspruch 1, dadurch gekennzeichnet, daß die OH-Zahl der Komponente b) 20 bis 200 mg KOH/g beträgt.

4. Verfahren zur Herstellung der Cellulosesubstanz-enthaltenden Lack-Emulsion gemäß Ansprüchen 1 bis 3, dadurch gekennzeichnet, daß zuerst das Polyisocyanat mit dem OH-gruppenhaltigen Lackharz gegebenenfalls unter Zusatz eines Katalysators zusammengebracht wird, dem dann die Cellulosesubstanz und weitere Hilfsstoffe hinzugefügt, gemeinsam homogenisiert und mit Wasser in eine Öl-in-Wasser-Emulsion umgewandelt werden.

5. Verwendung einer Lack-Emulsion gemäß einem der Ansprüche 1 bis 4 in Lackharzemulsionen für die Oberflächenbehandlung von Holz, Metall, Papier, Kunststoff, Leder oder Glas.